(19) Europäisches Patentamt / European Patent Office / Office européen des brevets

(11) **EP 1 748 528 B1**

(12) **FASCICULE DE BREVET EUROPEEN**

(45) Date de publication et mention
de la délivrance du brevet:
**17.12.2014 Bulletin 2014/51**

(51) Int Cl.:
***H02H 7/085*** *(2006.01)*          ***H02H 3/38*** *(2006.01)*
*H02H 3/00* *(2006.01)*

(21) Numéro de dépôt: **06350008.6**

(22) Date de dépôt: **13.07.2006**

(54) **Procédé de commande d'un moteur asynchrone à déphasage pour des volets roulants**

Verfahren zur Steuerung eines Asynchronmotors

Method for the control of an asynchronous motor

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **27.07.2005 FR 0507999**

(43) Date de publication de la demande:
**31.01.2007 Bulletin 2007/05**

(73) Titulaire: **Jouvence**
**62136 Lestrem (FR)**

(72) Inventeur: **Stempniakowski, Tony**
**62840 Laventie (FR)**

(74) Mandataire: **Tournel, Jean Louis**
**12, rue d'Orléans**
**44000 Nantes (FR)**

(56) Documents cités:
**EP-A- 0 720 269      FR-A- 2 770 699**
**US-A- 4 547 720      US-B1- 6 215 265**

**Description**

L'invention se rapporte a un procédé de commande d'un moteur asynchrone à déphasage pour des volets roulants.

Elle se rapporte également aux moyens pour la mise en oeuvre du procédé.

Classiquement, un volet roulant comporte un tablier qui s'enroule sur un axe dit d'enroulement logé dans un caisson.

Des coulisses latérales guident les bords latéraux du tablier.

Un moyen de manoeuvre entraîne l'axe d'enroulement.

Dans sa plus simple expression, le moyen de manoeuvre est une sangle qui s'enroule sur un tambour.

On constate que les volets roulants sont de plus en plus souvent enroulés ou déroulés à l'aide d'un moteur électrique couplé mécaniquement à l'axe d'enroulement du tablier.

Pour actionner le moteur selon les deux sens, le moteur, alimenté en courant alternatif comporte deux bobines d'enroulement opposé .Ces bobines ont une de leurs extrémités reliée à un commun tandis que leurs autres extrémités, dites bornes connectables, sont reliées entre elles par un condensateur de déphasage.

Chaque borne connectable peut alors être reliée à l'alimentation au moyen d'un inverseur ou d'un moyen approprié tel un jeu d'inverseurs afin d'alimenter en énergie l'une ou l'autre des bobines du moteur et donc provoquer la descente ou la remontée du tablier.

Pour éviter que l'utilisateur maintienne le doigt sur l'inverseur ou soit obligé d'arrêter manuellement le tablier en fin de course par action sur le jeu d'inverseurs, il est connu (FR-A-2.780.089) d'équiper le moteur d'un dispositif supplémentaire mesurant le couple moteur et d'examiner la variation du couple pour commander l'arrêt du fonctionnement du moteur.

En effet, en fin de course du tablier, le couple résistant va augmenter et donc signifier que le tablier est en buté. En détectant cette augmentation du couple, on peut donc arrêter l'alimentation du moteur.

Il est connu également que la charge du moteur est différente selon le poids du tablier et le sens de la montée ou de la descente.

Il est connu d'examiner l'évolution de l'angle de déphasage US 5151638 entre la tension et le courant total aux bornes du moteur au moyen d'un tore ferromagnétique.

Il est connu un procédé de commande (FR-A-2.813.453) d'un moteur qui consiste à prélever, d'une part, la tension sur le commun des deux bobines et, d'autre part, le courant en un point situé entre les inverseurs et le neutre et exploiter le déphasage courant /tension produit par le condensateur de déphasage et la charge du moteur.

En effet, il est connu que la charge du moteur va influer sur la valeur du déphasage.

En surveillant ce déphasage, il est donc possible d'arrêter le moteur avant que la charge soit excessive et provoque la destruction à plus ou moins long terme du moteur.

Toutefois, la mesure dépend des caractéristiques du moteur et par exemple de la température etc.

Cela pose donc un problème car à chaque moteur et volet il faut régler sur place la valeur limite de déphasage qui va déclencher l'arrêt en sachant que cela est une valeur inexacte en tous moments.

Pour répondre à cet inconvénient, il est connu un dispositif EP-A- 720 269 faisant appel des points particuliers de prélèvement des mesures et à des opto-coupleurs pour s'affranchir des paramètres du moteur.

Dans le même esprit de s'affranchir des paramètres moteurs, il est également connu (EP-A-999.632) un procédé qui consiste à prélever, d'une part, la tension sur le commun des deux bobines et, d'autre part, la tension aux bornes du condensateur de déphasage pour exploiter le déphasage des tensions en mesurant la variation du déphasage dans le temps.

Le procédé exploite donc la mesure de la tension d'alimentation du moteur et la tension aux bornes du condensateur. La tension aux bornes du condensateur est prise en un point situé entre le condensateur et le jeu d'inverseur.

Plus précisément, le principe consiste à surveiller le moment où le passage de la dérivée passe par un pic positif puis négatif avant de s'annuler. Cette évolution du signal se produit lorsque le tablier vient en buté.

Lorsque la variation de ce déphasage dépasse une valeur seuil prédéfinie introduite en mémoire lors de la programmation le moteur s'arrête.

La combinaison des mesures particulières du déphasage des tensions et de la dérivée permet de s'affranchir des paramètres du moteur et de comparer l'évolution du déphasage par rapport à des valeurs prédéfinies.

Cela lui permet en outre de s'affranchir des variations de tension.

En effet, en prenant en compte ces tensions particulières, la mesure n'est plus influencée par les paramètres du moteur telle la température et de ce fait on peut prédéfinir, par une étude expérimentale, des valeurs limites qui sont introduites en mémoire préalablement et qui sont définies en fonction du moteur.

Le principe ne fonctionne plus, si on mesure le déphasage courant/tension en d'autres points car la mesure est alors influencée par les paramètres du moteur.

On connaît une commande d'arrêt d'un moteur asynchrone FR-A-2 770 699 qui consiste à prélever une tension aux bornes de l'enroulement principale, une tension aux bornes de l'enroulement secondaire de les combiner par une opération arithmétique pour avoir une grandeur qui sera comparée à une valeur de référence. Cette valeur seuil est soit fixe soit relative. Dans ce dernier cas elle est dite relative car on utilise alors un potentiomètre pour la régler. Le réglage peut être changé mais il n'évolue pas à chaque instant. Il faut donc faire un réglage.

Le but de l'invention est d'éviter de faire un réglage. Le système est auto-adaptatif.

A cet effet, l'invention a pour objet un procédé de commande d'un moteur asynchrone à deux bobines reliées par un condensateur de déphasage mesurant le déphasage courant/tension et examinant l'évolution du déphasage dans le temps pour stopper la rotation du moteur en fonction de l'évolution du déphasage comparée à une valeur limite d'écart de déphasage, ce procédé étant caractérisé en ce *qu'on calcule la valeur de l'écart (EL) de déphasage dit limite à partir d'au moins une mesure du déphasage (Di) courant/tension et périodiquement on renouvelle ce calcul.*

L'invention a également pour objet les moyens pour la mise oeuvre du procédé. L'invention sera bien comprise à l'aide de la description ci-après faite à titre d'exemple en regard du dessin qui représente :

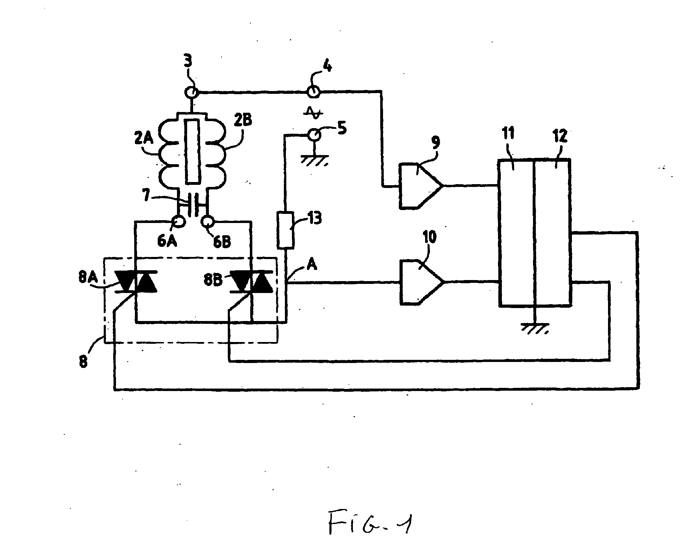

    FIG 1 : Schéma d'une commande électronique d'un moteur.

En se reportant au dessin, on voit une représentation schématique d'une commande d'un moteur destiné à entraîner le tablier d'un volet roulant.

Classiquement ce moteur 1 comprend deux bobines 2A, 2B à enroulement opposé en sorte de pouvoir entraîner un arbre de transmission dans un sens et dans l'autre sens.

Classiquement, ces bobines ont une de leurs extrémités reliée à un commun 3 tandis que leurs autres extrémités 6A, 6B, dites bornes connectables, sont reliées entre elles par un condensateur 7 de déphasage.

Chaque borne connectable peut alors être reliée à la phase 5 de l'alimentation par un moyen 8 approprié tel un jeu d'inverseurs 8A, 8B afin d'alimenter en énergie l'une ou l'autre des bobines du moteur et donc provoquer la descente ou la remontée du tablier.

Le jeu d'inverseur est, par exemple, un jeu de triacs commandés par un microcontrôleur.

Classiquement, la commande comporte un moyen 11 en vue d'analyser le déphasage courant /tension tel un moyen comparateur.

A cet effet, on prélève, d'une part, la tension sur le commun 3 des deux bobines et, d'autre part, le courant en un point A situé entre les inverseurs 8A,8B et le neutre et

on exploite le déphasage courant /tension produit par la présence du condensateur de déphasage et l'effet de la charge du moteur et notamment son évolution dans le temps.

Une faible résistance 13 permet de prélever le courant. Cette faible résistance est placée entre le neutre et le jeu d'inverseurs.

La charge du moteur va varier au cours de la montée et de la descente.

Lors de la descente du tablier, le poids du tablier va tendre à accélérer le moteur alors qu'en sens contraire le poids du tablier va freiner la rotation du moteur en sachant que ce poids diminue au fur et à mesure de la montée.

Le déphasage va également évoluer en fonction de la température et donc des caractéristiques du moteur.

Pour obvier à cette difficulté, le procédé de commande d'un moteur asynchrone à deux bobines 2A, 2B reliées par un condensateur 7 de déphasage mesurant le déphasage courant/tension et examinant l'évolution du déphasage dans le temps pour stopper la rotation du moteur en fonction de l'évolution du déphasage comparée à une valeur limite EL d'écart de déphasage se caractérise en ce qu'on détermine périodiquement la valeur de l'écart EL de déphasage dit limite à partir d'au moins une mesure du déphasage Di courant/tension et d'un calcul.

On aura donc une valeur de déphasage limite variable dans le temps et non fixée définitivement.

Il n'est pas nécessaire de fixer une valeur en usine.

En effet, on a constaté que l'évolution du déphasage en fin de course était proportionnelle à l'amplitude du déphasage mesurée, cette valeur mesurée étant réalisée antérieurement à l'exploitation de celle ci mais en cours d'utilisation du moteur.

Cette valeur mesurée est différente. On a pu mesurer que le déphasage du même moteur à chaud est de l'ordre de 1500 microsecondes tandis qu'a froid il est de 1750 microsecondes soit une variation de 15 à 20% d'où l'intérêt de pouvoir s'adapter.

Par une ou plusieurs mesures du déphasage du moteur en fonctionnement réalisées en dehors des zones d'évolution rapide du déphasage, c'est à dire avant la fin de course et après le démarrage, on va calculer l'écart EL limite que la variation déphasage ne peut dépasser .On fait ces mesures en dehors des zones limites car , dans ces zones limites on cherche à posséder une détection accentuée.

Cet écart n'est pas le résultat de mesures expérimentales à partir desquelles on va calculer une valeur de référence introduite dans une mémoire mais une valeur calculée à un instant donné tenant compte des paramètres du moteur et notamment de la température.

Cet écart EL sera le résultat de la mesure de déphasage Di divisé par un coefficient C défini éventuellement lors d'une étape d'essais préalables ou du résultat de plusieurs mesures du déphasage moyennées.

$$EL : (\Sigma\,(\,D1+D2+\ldots+DN))/N\,/C.$$

Il suffira de mesurer l'écart réel ER entre la mesure à un instant T et celle à un instant T-1 et la comparer avec l'écart EL limite calculé pour décider de l'arrêt du moteur.

Avantageusement, on détermine périodiquement et, par exemple à chaque mesure, la valeur de cet écart EL limite. On a donc une valeur de référence flottante.

Afin de pondérer la variation de l'écart limite dans le temps, on détermine cet écart limite sur la base d'une valeur pondérée de la mesure du déphasage tenant compte par exemple de la valeur mesurée du déphasage et/ou déterminée auparavant par un calcul afin de lisser les fluctuations.

On va donc adapter dans le temps et en fonction des paramètres du moteur, la valeur limite à ne pas dépasser. Il importe donc peu que le moteur soit chaud ou froid ou soit en montée ou descente, on a un système auto-adaptatif.

Il n'est pas nécessaire d'introduire une valeur de référence, celle ci sera calculée automatiquement

Le critère d'arrêt peut être simple, à savoir si l'écart mesuré ER dépasse la valeur limite EL, le moteur est stoppé ou encore il peut être vérifié et, par exemple, il faut que l'écart mesuré dépasse plusieurs fois l'écart limite pour provoquer l'arrêt du moteur.

Un autre critère consiste à comparer la mesure de l'écart réel ER à la valeur de l'écart EL limite et provoquer l'arrêt du moteur lorsque l'écart réel dépasse un pourcentage de l'écart limite EL, par exemple 10%.

De préférence, on détermine la variation du déphasage en fonction d'une valeur pondérée DP de déphasage tenant compte de toutes ou partie des précédentes valeurs mesurées de déphasage.

Dans une forme d'utilisation, l'écart qui sera pris en compte pour le comparer à l'écart limite sera le résultat de la valeur mesurée du déphasage moins la valeur pondérée du déphasage calculée précédemment.

Le déphasage pondéré sera calculé à partir d'au moins le déphasage pondéré précédent et de la mesure réelle.

Ainsi à un instant T, on mesure le déphasage réel tension/courant et à partir de cette valeur réelle de déphasage, d'une part, on calcule une valeur pondérée DP de déphasage tenant compte indirectement des déphasages mesurés précédemment et, d'autre part, on calcule une valeur limite EL d'écart destinée à la prochaine mesure faite à l'instant T+1 et on compare l'écart entre le déphasage réel et la valeur précédente du déphasage pondérée et on la compare avec la valeur limite d'écart calculée lors de la précédente mesure.

Ainsi, pour la surveillance on effectue des mesures, par exemple à la même fréquence que le courant, c'est dire cinquante fois par seconde.

Selon le choix du calcul de l'écart limite on va donc rendre plus ou moins sensible la détection de la variation du déphasage. Par exemple, on peut augmenter la sensibilité de la détection en fin de course par exemple sur les derniers dix centimètres ou sur les dernières secondes avant la fin course prévu.

En modifiant et notamment en augmentant le coefficient C diviseur, par exemple, à l'approche des fins de course, on réduit la valeur de l'écart limite et on augmente donc la sensibilité.

Bien entendu cela suppose que l'on connaisse la position du volet par un procédé quelconque tel l'incrémentation d'un compteur.

Le coefficient diviseur sera éventuellement, mais de préférence, différent pour la montée et pour la descente.

Bien évidemment le dispositif comporte des moyens en vue de connaître approximativement la position du bord libre du tablier en sorte de configurer la sensibilité en fonction de la position du bord libre.

On pourra donc entrer au moins deux formules de calcul de l'écart limite en mémoire une formule pour les deux extrémités et une autre formule pour le reste du parcours.

Le dispositif comprend donc des moyens 9,10 pour prélever le courant et la tension.

Il comprend également un moyen 11 pour mesurer le déphasage en examinant, par exemple, le passage à zéro du signal sinusoïdal de la tension et du courant.

Un moyen 12 de calcul permet de calculer la valeur limite de l'écart et du déphasage pondéré.

On utilisera, par exemple un microcontrôleur ou un microprocesseur avec ses mémoires.

Hormis, l'introduction de la formule de calcul, il n'est pas nécessaire d'introduire des valeurs prédéfinies.

On va donc pouvoir adapter automatiquement la valeur de l'écart limite en fonction des conditions de fonctionnement du moteur (froid, chaud).

Cela présente un grand intérêt dans le fonctionnement du volet roulant.

Si généralement , les fabricants de moteurs fixent une butée haute et une butée basse pour stopper avant que le moteur force, cela oblige à une opération de réglage préalable qui pour certains détenteurs de volets roulants est une étape qu'ils oublient causant ainsi un disfonctionnement.

Le volet peut fonctionner sans que préalablement au fonctionnement normal un point haut et un point bas aient été fixés lors d'une étape de recherche de ces points haut et bas. Les points hauts et bas sont recherchés, par exemple, par apprentissage .Plus précisément à la mise en route du volet roulant on va indiquer au volet de rechercher les points haut et point bas en forçant sur la rotation du moteur. Ces points seront alors mémorisés et ensuite, par une opération arithmétique et la mesure de la position du volet, on indiquera au moteur qu'il doit arrêter impérativement avant ces points haut et bas. Lors de cette étape de recherche de point haut, on peut indiquer au programme que le déphasage doit atteindre une valeur forte supérieure à celle qui sera le valeur limite lors de l'exploitation du volet roulant.

Si ces points haut et bas ne sont pas fixés de la manière précitée, des points haut et bas de substitutions seront malgré tout mémorisés avec le principe de la détermination de l'écart limite expliquée plus avant. En fin de course on n'empêchera pas le « forçage » du tablier mais on le limitera. C'est seulement la mesure du déphasage qui va agir sur l'arrêt du moteur. On stoppe le moteur entraînant le volet roulant lorsqu'il atteint une position haute et/ou basse uniquement par comparaison de l'écart réel de déphasage avec l'écart limite (EL)calculé. Dans la mesure où on a fixé des points dits de substitution et que l'on connaît la position du volet, on peut augmenter, avant d'atteindre ces points de substitution, la sensibilité de détection en modifiant le coefficient C.

Lorsque des points haut et bas sont fixés, le procédé mis en place sert de procédé de sécurité car en principe le volet ne s'arrêtera qu'en ses positions haute ou basse avant les points de forçage. Si un obstacle est sur la trajectoire du tablier, on va détecter une variation rapide du déphasage avant les points haut et bas donc cela va provoquer un arrêt du moteur.

La mesure telle qu'elle est conçue permet d'éviter les pincements de doigts.

Comme il l'a été dit, l'avantage résulte de l'utilisation d'une détermination d'une valeur écart limite EL qui soit constamment calculée et qui donc tient compte de l'usure du moteur, de la température, des conditions de frottements du tablier dans les coulisses etc.

**Revendications**

1. Procédé de commande d'un moteur asynchrone pour volet roulant à deux bobines (2A, 2B) reliées par un condensateur (7) de déphasage mesurant le déphasage courant/tension et examinant l'évolution du déphasage dans le temps pour stopper la rotation du moteur en fonction de l'évolution du déphasage comparée à une valeur limite (EL) d'écart de déphasage lequel procédé se **caractérise en ce** *qu'on calcule la valeur de l'écart* (EL) *de déphasage dit limite à partir d'au moins une mesure du déphasage (Di) courant/tension et périodiquement on renouvelle ce calcul.*

2. Procédé de commande d'un moteur asynchrone selon la revendication 1 **caractérisé en ce que** l'écart (EL) est le résultat de la mesure de déphasage divisé par un coefficient (C).

3. Procédé de commande d'un moteur asynchrone selon la revendication 1 ou 2 **caractérisé en ce qu'**on détermine périodiquement la valeur de cet écart limite (EL).

4. Procédé de commande d'un moteur asynchrone selon la revendication 3 caractérisé qu'on détermine l'écart limite sur la base d'une valeur pondérée de la mesure du déphasage.

5. Procédé de commande d'un moteur asynchrone selon l'une quelconques des revendication 1 à 4 caractérisé en qu'on mesure le déphasage réel tension/courant et à partir de cette valeur réelle de déphasage, d'une part, on calcule une valeur pondérée (DP) de déphasage tenant compte indirectement des déphasages mesurés précédemment et, d'autre part, on calcule une valeur limite (EL) d'écart destinée à la prochaine mesure faite à l'instant T+1 et on compare l'écart entre le déphasage réel et la valeur précédente du déphasage pondérée et on la compare avec la valeur limite d'écart calculée lors de la précédente mesure.

6. Procédé de commande d'un moteur asynchrone selon l'une quelconque des revendications précédentes **caractérisé en ce qu'**on stoppe le moteur entraînant le volet roulant lorsqu'il atteint une position haute et/ou basse uniquement par comparaison de l'écart réel de déphasage avec l'écart limite (EL)calculé.

7. Procédé de commande d'un moteur asynchrone selon l'une quelconque des revendications 1 à 6 **caractérisé en ce qu'**il comprend une étape de détermination des positions haute et basse du volet roulant.

8. Procédé de commande d'un moteur asynchrone selon l'une quelconques des revendications précédente **caractérisé en ce qu'**on modifie la sensibilité de la détection en fin de course en modifiant le coefficient (C) diviseur.

9. Procédé de commande d'un moteur asynchrone selon la revendication 8 **caractérisé en ce qu'**on augmente la sensibilité à l'approche des fins de course du volet roulant.

10. Moyens pour la mise en oeuvre du procédé selon l'une quelconque des revendications précédentes comprenant un moteur asynchrone à deux bobines (2A, 2B) reliées par un condensateur (7) de déphasage mesurant le déphasage courant/tension et examinant l'évolution du déphasage dans le temps pour stopper la rotation du moteur en fonction de l'évolution du déphasage comparée à une valeur limite (EL) d'écart de déphasage, ces moyens étant **caractérisés en ce qu'**ils comprennent un moyen (12) de calcul permettant de calculer la valeur limite de l'écart de déphasage à partir d'au moins une mesure du déphasage courant/tension, et périodiquement de renouveler ce calcul.

**Patentansprüche**

1. Verfahren zur Steuerung einer Asynchronmaschine für einen Rolladen mit zwei Spulen (2A, 2B), die durch einen Phasenverschiebungskondensator (7) verbunden sind, um die Phasenverschiebung zwischen Strom und Spannung zu messen und die zeitabhängige Entwicklung der Phasenverschiebung zu beobachten, um das Drehen der Maschine je nach der Entwicklung der Phasenverschiebung im Vergleich zu einem Grenzwert (EL) der Abweichung der Phasenverschiebung zu stoppen, wobei dieses Verfahren **dadurch gekennzeichnet ist, dass** der Wert der sogenannten Grenzabweichung (EL) der Phasenverschiebung ab wenigstens einer Messung der Phasenverschiebung zwischen Strom und Spannung berechnet wird und dass periodisch diese Berechnung erneuert wird.

2.  Steuerungsverfahren einer Asynchronmaschine nach Anspruch 1, **dadurch gekennzeichnet, dass** die Abweichung (EL) das Ergebnis der Messung der durch einen Koeffizienten (C) dividierten Phasenverschiebung ist.

3.  Steuerungsverfahren einer Asynchronmaschine nach Anspruch 1 oder 2, **dadurch gekennzeichnet, dass** der Wert dieser Grenzabweichung (EL) periodisch festgestellt wird.

4.  Steuerungsverfahren einer Asynchronmaschine nach Anspruch 3, **dadurch gekennzeichnet, dass** die Grenzabweichung auf der Basis des gewichteten Wertes der Messung der Phasenverschiebung festgestellt wird.

5.  Steuerungsverfahren einer Asynchronmaschine nach einem der Ansprüche 1 bis 4, **dadurch gekennzeichnet, dass** die tatsächliche Phasenverschiebung zwischen Spannung und Strom gemessen wird und auf der Basis dieser IstWertes der Phasenverschiebung auf der einen Seite ein gewichteter Wert (DP) der Phasenverschiebung berechnet wird, der die vorher gemessenen Phasenverschiebungen indirekt in Betracht zieht, und auf der anderen Seite ein Grenzwert (EL) der Abweichung berechnet wird, der für die nächste, zur Zeit T+1 gemachten Messung bestimmt ist und die Abweichung zwischen der tatsächlichen Phasenverschiebung und dem vorherigen Wert der gewichteten Phasenverschiebung verglichen wird und diese Messung mit dem Grenzwert der Abweichung verglichen wird, der während der letzten Messung berechnet wurde.

6.  Steuerungsverfahren einer Asynchronmaschine nach einem der vorherigen Ansprüche, **dadurch gekennzeichnet, dass** die den Rolladen antreibende Maschine gestoppt wird, wenn diese Maschine eine hohe und/oder niedrige Stellung erreicht, die allein durch Vergleich der tatsächlichen Abweichung der Phasenverschiebung mit der berechneten Grenzabweichung (EL) festgestellt wird.

7.  Steuerungsverfahren einer Asynchronmaschine nach einem der Ansprüche 1 bis 6, **dadurch gekennzeichnet, dass** es einen Schritt der Feststellung der hohen und niedrigen Stellungen des Rolladens aufweist.

8.  Steuerungsverfahren einer Asynchronmaschine nach einem der vorherigen Ansprüche, **dadurch gekennzeichnet, dass** die Empfindlichkeit der Erfassung der Endlage dadurch abgeändert wird, dass der dividierende Koeffizient (C) abgeändert wird.

9.  Steuerungsverfahren einer Asynchronmaschine nach Anspruch 8, **dadurch gekennzeichnet, dass** die Empfindlichkeit beim Annähern an die Endlage des Rolladens erhöht wird.

10. Mittel zur Ausführung des Verfahrens nach einem der vorherigen Ansprüche, umfassend eine Asynchronmaschine mit zwei Spulen (2A, 2B), die durch einen Phasenverschiebungskondensator (7) verbunden sind, um die Phasenverschiebung zwischen Strom und Spannung zu messen und die zeitabhängige Entwicklung der Phasenverschiebung zu beobachten, um das Drehen der Maschine je nach der Entwicklung der Phasenverschiebung im Vergleich zu einem Grenzwert (EL) der Abweichung der Phasenverschiebung zu stoppen, wobei diese Mittel **dadurch gekennzeichnet sind, dass** sie eine Berechnungseinheit (12) aufweisen, um auf der Basis wenigstens einer Messung der Phasenverschiebung zwischen Strom und Spannung den Grenzwert der Abweichung der Phasenverschiebung zu berechnen und periodisch diese Berechnung zu erneuern.

**Claims**

1.  Method of controlling an asynchronous motor for a roller shutter with two coils (2A, 2B) connected by a phase shift capacitor (7) measuring the current/voltage phase shift and examining the change in the phase shift over time so as to stop the rotation of the motor as a function of the change in the phase shift compared to a phase shift difference limit value (EL), which method is **characterized in that** the so-called phase shift difference limit value (EL) is calculated from at least one current/voltage phase shift measurement (Di), and this calculation is redone periodically.

2.  Method of controlling an asynchronous motor according to claim 1, **characterized in that** the difference (EL) is the result of the phase shift measurement divided by a coefficient (C).

3.  Method of controlling an asynchronous motor according to claim 1 or 2, **characterized in that** the value of this limit difference (EL) is determined periodically.

4. Method of controlling an asynchronous motor according to claim 3, **characterized in that** the limit difference is determined on the basis of a weighted value of the phase shift measurement.

5. Method of controlling an asynchronous motor according to any one of claims 1 to 4, **characterized in that** the actual voltage/current phase shift is measured and, from this actual phase shift value, on the one hand a weighted phase shift value (DP) is calculated taking account indirectly of the phase shifts measured previously and, on the other hand, a difference limit value (EL) is calculated which is intended for the next measurement carried out at the instant T+1, and the difference between the actual phase shift and the previous weighted phase shift value is compared, and this is compared with the difference limit value calculated during the previous measurement.

6. Method of controlling an asynchronous motor according to any one of the preceding claims, **characterized in that** the motor driving the roller shutter is stopped when it reaches a top and/or bottom position only by comparing the actual phase shift difference with the calculated limit difference (EL).

7. Method of controlling an asynchronous motor according to any one of claims 1 to 6, **characterized in that** it comprises a step of determining the top and bottom positions of the roller shutter.

8. Method of controlling an asynchronous motor according to any one of the preceding claims, **characterized in that** the end-of-travel detection sensitivity is modified by modifying the dividing coefficient (C).

9. Method of controlling an asynchronous motor according to claim 8, **characterized in that** the sensitivity is increased upon approaching the ends-of-travel of the roller shutter.

10. Means for implementing the method according to any one of the preceding claims, comprising an asynchronous motor with two coils (2A, 2B) connected by a phase shift capacitor (7) measuring the current/voltage phase shift and examining the change in the phase shift over time so as to stop the rotation of the motor as a function of the change in the phase shift compared to a phase shift difference limit value (EL), these means being **characterized in that** they comprise a calculation means (12) making it possible to calculate the phase shift difference limit value from at least one current/voltage phase shift measurement, and periodically to redo this calculation.

FiG-1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2780089 A
- US 5151638 A
- FR 2813453 A
- EP 720269 A
- EP 999632 A
- FR 2770699 A